**Europäisches Patentamt**

**European Patent Office**

**Office européen des brevets**

(19)

(11) Veröffentlichungsnummer : **0 357 886 B1**

(12) **EUROPÄISCHE PATENTSCHRIFT**

(45) Veröffentlichungstag der Patentschrift :
27.05.92 Patentblatt 92/22

(51) Int. Cl.⁵ : **C04B 41/48**

(21) Anmeldenummer : 89110109.9

(22) Anmeldetag : 05.06.89

(54) **Verfahren und Mittel zur Steinkonservierung.**

(30) Priorität : **03.09.88 DE 3830017**

(43) Veröffentlichungstag der Anmeldung :
**14.03.90 Patentblatt 90/11**

(45) Bekanntmachung des Hinweises auf die
Patenterteilung :
**27.05.92 Patentblatt 92/22**

(84) Benannte Vertragsstaaten :
**AT BE CH DE ES FR GB GR IT LI LU NL SE**

(56) Entgegenhaltungen :
US-A- 3 850 661
US-A- 3 900 622
US-A- 3 954 694
US-A- 3 980 604
H.R.Sasse, Das Bauzentrum 2/90, S. 24-28,
(1990).
H.R. Sasse, D. Honsinger, Sonderausgabe
Bautenschutz + Bausanierung 1989, S. 82-86

(56) Entgegenhaltungen :
D. Honsinger, H.R.Sasse, Bautenschutz +
Bausanierung 11 (1988),/205-211/ (1988)
H.Höcker, H.R.Sasse, Denkmalpflege und Naturwissenschaft im Gespräch, Workshop Fulda (DE) 6/7. März 1990, Sonderheft
desVerbundforschungsprojekts Steinzerfall
und Steinkonservierung

(73) Patentinhaber : **RÜTGERSWERKE
AKTIENGESELLSCHAFT**
**Mainzer Landstrasse 217**
**W-6000 Frankfurt am Main 1 (DE)**

(72) Erfinder : **Conrad, Hermann, Dr.**
**Rudolfstrasse 10**
**W-4130 Moers (DE)**
Erfinder : **Mathes, Alfred, Dr.**
**Buchenstrasse 12**
**W-4100 Duisburg 74 (DE)**
Erfinder : **Sasse, Rainer, Prof. Dr.**
**Krefelder Strasse 6**
**W-5100 Aachen (DE)**
Erfinder : **Fiebrich, Michael, Dr.**
**Steppenbergallee 226**
**W-5100 Aachen (DE)**

EP 0 357 886 B1

## Beschreibung

Die Erfindung betrifft neue Verfahren zur Konservierung von porösen Steinen durch Tränkung sowie Mittel zur Durchführung dieses Verfahrens.

Die Konservierung von Steinen ist eine wichtige Maßnahme zur Erhaltung umweltgeschädigter Bauwerke und Denkmäler durch dauerhaften Schutz der Gesteinssubstanz vor physikalischen, chemischen und biologischen Angriffen.

Der weiterschreitende Verfall vieler imprägnierter Bauwerke zeigt, daß die derzeit hierzu verwendeten Materialien den gestellten Anforderungen nicht genügen. Silane oder Siloxanharze ergeben lediglich eine gute Hydrophobierung der Steine, aber keinen dauerhaften Schutz gegen Schadstoffe, die gasförmig oder über Kondenswasser in das Gestein gelangen.

Zudem werden diese Wirkungen im Laufe weniger Jahre wieder abgebaut, so daß eine dauerhafte Konservierung nicht gewährleistet ist. Kieselsäureester wirken nicht hydrophobierend. Sie ergeben eine Verfestigung des Steines mit einer Neigung zur Schalenbildung, die das vorzeitige Abplatzen der oberen Gesteinsschichten fördert. Daneben werden Sekundärporenbildungen durch das vergleichsweise große Schrumpfmaß der Behandlungsstoffe auf Kieselsäureesterbasis beobachtet, die die Wasseraufnahme begünstigen können. Diese Nachteile werden auch durch die Modifizierung mit Acrylaten nicht wesentlich gebessert.

Acrylate und Methacrylate, die radikalisch gehärtet werden, haben aufgrund der schnell anspringenden Härtung eine zu geringe Eindringtiefe. Zudem besteht bei warmen Außentemperaturen die Gefahr des Abdampfens der Monomeren. Darüberhinaus sind diese Systeme feuchtigkeitsempfindlich. Feuchtigkeit im Stein stört den radikalischen Vernetzungsmechanismus und verhindert zudem die Adhäsion des Polymeren auf dem Steinsubstrat.

Ebenfalls feuchtigkeitsempfindlich sind Polyurethansysteme, so daß die Gefahr besteht, daß anstelle einer Steinimprägnierung eine Füllung der Poren und Risse des Steines mit einem Mikroschaum erfolgt. Neben dem Umstand, daß ein absolut trockener Untergrund notwendig ist, zeigen sich die Nachteile, daß das Polymer leicht vergilbt und daß die biologische Beständigkeit nicht ausreichend ist.

Nitrifizierende Bakterien können das Polymer angreifen und dadurch den Zerfall des so behandelten Steines beschleunigen.

Diese Nachteile sind bei Epoxidharzen nicht gegeben. Aufgrund der dauerhaften und festen Bindungskraft sowie der Feuchtigkeits-, Wasser-, Bakterien- und Chemikalienbeständigkeit bieten sie sich für die dauerhafte Behandlung von Natursteinen an.

So sind die gebräuchlichen Epoxidharzsysteme, wie sie z. B. auch aus US-A 3,980,604 und US-A 3,850,661 bekannt sind, geeignet, Risse in Steinen kraftschlüssig zu verkleben und somit die Festigkeit zu sanierender Steine wiederherzustellen. Durch diese kraftschlüssige Verklebung behindern sie jedoch den natürlichen Wasseraustausch. Daher sind Epoxidharze, wie generell alle Stoffe, deren Wirkung im wesentlichen auf einer Verfestigung beruht, ebenfalls nicht zur Steinkonservierung geeignet.

Wie eine intensive Untersuchung (P. Kotlik, J. Zelinger; Sb. Vys. Sk. Chemiks technologische v. Praze 1983, 129-44) zeigt, ist es grundsätzlich möglich, mit niedermolekularen Epoxidverbindungen Steine so zu tränken, daß die Poren nicht verstopft, sondern die inneren Porenoberflächen mit einem dünnen Film ausgekleidet werden. Aber obwohl die Autoren mit einer Lösung eines niedermolekularen Epoxidharzes in einem organischen Lösungsmittel arbeiteten und obwohl die Steine unter Vakuum imprägniert wurden, was bei der praktischen Anwendung nicht bzw. schlecht möglich ist, wurden keine zufriedenstellenden Eindringtiefen des Epoxidharzes gefunden.

Es ist daher Aufgabe der Erfindung, ein Verfahren zur Konservierung von Natursteinen durch Tränkung mit härtbaren Kunststoffen bereitzustellen, das möglichst von witterungsbedingter Feuchtigkeit unabhängig ist und durch das ein möglichst großer und dauerhafter Schutz der Gesteinssubstanz vor physikalischen, chemischen und biologischen Angriffen erzielt wird, wobei aber trotzdem noch der natürliche Feuchteausgleich möglich ist und bei dem der härtbare Kunststoff auch bei vergleichsweise einfachen Applikationsverfahren tief in das Steinmaterial eindringt und nach dem Aushärten den Stein nicht wesentlich verfestigt.

Die Lösung der Aufgabe erfolgt durch Mittel zum Imprägnieren von Steinen gemäß der Ansprüche 1 bis 6, sowie durch ein Verfahren zum Imprägnieren von Steinen gemäß Anspruch 7.

Während Epoxidharze und auch handelsübliche Reaktivverdünner für Epoxidharze nicht zur Steinkonservierung geeignet sind, wurde gefunden, daß sich Mittel, die im wesentlichen aliphatische Glycidylether und Diglycidylether und die zur Härtung notwendige Menge eines Härters enthalten, bestens zur Konservierung von Steinen eignen:

Die Mittel sind dünnflüssig und dringen in das Steinmaterial ein. Durch Variation der Härter lassen sich unterschiedliche Verarbeitungs- und Härtungszeiten einstellen, so daß die Mittel erst dann aushärten, wenn sie in das Steinmaterial eingedrungen sind. Feuchtigkeit im Stein stört weder die Härtung noch die Adhäsion

EP 0 357 886 B1

am Steinsubstrat.

Die ausgehärteten Mittel sind chemikalien-, witterungs-, bakterien- und lichtbeständig. Von besonderer Bedeutung aber sind zwei weitere unerwartete Effekte: Die Poren des Gesteins werden nicht ausgefüllt, sondern die inneren Porenoberflächen mit dünnen Filmen ausgekleidet und hydrophobiert. Der so behandelte Stein ist zwar wasserabweisend, bleibt aber atmungsaktiv. Weiterhin wird der erfindungsgemäß behandelte Stein nicht wesentlich verfestigt, sondern die einzelnen durch Risse und Sprünge getrennten Steinpartikel werden nicht kraftschlüssig sondern elastisch miteinander verbunden und ausgekleidet und so vor weiterer Zerstörung geschützt.

Demgemäß besteht das erfindungsgemäße Verfahren zur Konservierung von Steinen darin, diese mit einem Stoff zu imprägnieren, das aliphatische Glycidylether und Diglycidylether sowie zur Härtung derselben notwendige Härter enthält. Mit diesem Mittel können alle Steine konserviert werden, die eine Mindestporosität aufweisen, insbesondere Natursteine wie Sand-, Kalk- oder Tuffsteine. Die erfindungsgemäßen Imprägniermittel enthalten als wesentliche Komponenten aliphatische Glycidylether mit aliphatischen Grundketten mit 4 bis 15 C-Atomen; d. h. eine oder mehrere der folgenden Verbindungen: Butan-, Hexan-, Heptan-, Octan-, Nonan-, Decan-, Undecan- oder Dodecanglycidyl- und -diglycidylether, sowie die zur Härtung notwendige Menge eines Härters.

Durch Variation und durch Abmischen verschiedener aliphatischer Mono- und Diglycidylether mit unterschiedlicher Kettenlänge lassen sich der Elastizitätsmodul und die Glasübergangstemperaturen des ausgehärteten Imprägniermittels variieren. Es lassen sich somit weitmaschige Vernetzungen und Glasübergangstemperaturen von -20 bis -25 °C erzielen.

Aliphatische Diglycidylether mit Grundketten die weniger als 6 C-Atome enthalten, führen zu einem unerwünschten Verfestigungseffekt. Ihnen müssen monofunktionelle Reaktivverdünner (Monoglycidylether) mit 4 bis 15 C-Atomen zugemischt werden. Bei Diglycidylethern mit Grundketten mit mehr als 12 C-Atomen ist auch bei Mitverwendung von Lösemitteln und Reaktivverdünnern die ausreichende Eindringtiefe nicht mehr gegeben. Günstig ist die Verwendung frisch destillierter Reaktivverdünner, deren Viskosität nochmals erniedrigt ist und die eine günstigere Farbzahl und erhöhte Verwitterungsbeständigkeit zeigen.

Härter für die aliphatischen Glycidyl- und Diglycidylether können alle Härter sein, von denen bekannt ist, daß sie Epoxidharze bei Raumtemperatur härten, wie z. B. primäre, sekundäre oder tertiäre Amine, Polyamine, Polyaminoamide oder Iminoverbindungen. Dabei sind allerdings aus praktischen Erwägungen die Härter vorzuziehen, die mit den aliphatischen Glycidylethern lückenlos mischbar sind, die eine niedrige Viskosität und eine lange Topfzeit haben.

Aus Gründen der geringeren Vergilbungsgefahr sind aliphatische Aminoverbindungen besser geeignet als aromatische Aminoverbindungen. Bevorzugte Härter sind daher Polymethylendiamine mit bis zu 12 Methylengruppen, Polyetherdiamine der allgemeinen Formel :

$$H_2N(CH_2)_nO(CH_2CH_2O)_m(CH_2)_nNH_2$$

wobei n = 1 - 3 und m = 1 - 6,
aliphatische Polyamine der allgemeinen Formeln:

$$H_2N (CH_2)_n NH (CH_2)_n NH_2$$

wobei n = 1 - 5

$$H_2N ((CH_2)_2NH)_n (CH_2)_2 NH_2$$

wobei n = 2 - 4

$$H_2N (CH_2)_2 NH (CH_2)_2 OH \text{ oder}$$
$$CH_3 (CH_2)_n (CH_2CH_2NH)_m CH_2 CH_2 NH_2$$

wobei n = 1 - 4 und m = 1 - 5

Die Härter können einzeln oder im Gemisch miteinander eingesetzt werden. Somit kann die Härtungsgeschwindigkeit und damit die Verarbeitungszeit variiert werden. Im allgemeinen wird man eine Verarbeitungszeit von mindestens 1 h anstreben, sowie einen langsamen Viskositätsanstieg der härtenden Masse. Da die erfindungsgemäßen Imprägniermittel im Stein einer weiträumigen Verteilung unterliegen, ist ihre Reaktionszeit im Innern der Steine noch weiter verzögert. Dadurch wird erreicht, daß die erfindungsgemäßen Imprägniermittel noch bis zu mehreren Tagen in den Poren des Steines eindringen können.

Die Menge der eingesetzten Härter muß ausreichend sein, um alle Epoxidgruppen zu vernetzen. Im allgemeinen liegt die Härtermenge bei 15 bis 30 % der Epoxidverbindungen. Die erfindungsgemäßen Mittel können neben den Epoxidverbindungen und Härtern noch weitere Zusatzstoffe enthalten wie z. B. übliche Beschleuniger oder Verzögerer der Härtungsreaktion, um die jeweils gewünschte Verarbeitungszeit einzustellen, weitere Stoffe, die mit Epoxidverbindungen vernetzen wie z. B. Polymerkaptoverbindungen und Lösemittel.

Derartige Lösungsmittel wie z. B. Ketone, Ester, Benzine, Cyclohexan oder niedermolekulare Aromaten, die in einer Menge von bis zu 60 Gew.-% bezogen auf das fertige Mittel eingesetzt werden können, erniedrigen die Viskosität und erhöhen die Eindringtiefe der Imprägniermittel.

3

Besonders vorteilhaft ist die Zugabe von bis zu 5 Gew.-% bezogen auf das Gesamtmittel von merkapto-, amino- bzw. epoxyfunktionellen Silanen, die einerseits mit den Epoxidgruppen reagieren, andererseits zu Silicaten und Kieselsäure eine ausgezeichnete Adhäsion.

Ebenso vorteilhaft ist der Zusatz von bis zu 20 Gew.-% eines dünnflüssigen merkaptoendständigen Polysulfidoligomers. Diese Substanzen, die unter anderem unter der Bezeichnung Thiokol® LP 3 oder LP 33 im Handel sind, verleihen dem gehärteten Epoxidharz eine gewisse Flexibilität und erniedrigen den Glaspunkt.

Dies ist besonders nützlich bei Steinmaterial, das extremen Temperaturschwankungen ausgesetzt ist oder dessen Oberfläche so großen Schädigungen ausgesetzt ist, daß sich Wasser in so großen Mengen ansammeln kann, daß es beim Gefrieren eine direkte Sprengwirkung entfalten kann. Die Polysulfidoligomere bedingen den weiteren Vorteil, daß sie eine Imprägnierung von nassem Stein ermöglichen.

Ebenfalls auf nassem Stein lassen sich Mittel einsetzen, die als wäßrige Emulsion zum Einsatz kommen und die eine Härterkomponente enthalten, wie sie der EP-B 103 908 entspricht. Derartige Emulsionen eignen sich auch zur Imprägnierung großporiger, trockener Steine, denn durch die Verstärkung der Kapillarkräfte, durch den durch die Hydrophilie des Steines bedingten Wassertransport, werden die niedermolekularen Epoxid- und Härterkomponenten weit in das Innere des Steines hineingezogen.

Die erfindungsgemäßen Mittel werden kurz vor Gebrauch durch Zusammenmischen der die Epoxidverbindungen enthaltenden Komponente und der den Härter enthaltenden Komponente hergestellt und innerhalb der Verarbeitungszeit der Mittel durch übliche Verfahren wie Streichen, Walzen, Tauchen oder Sprühen gleichmäßig in dünner Schicht auf den Stein aufgebracht. Beim Imprägnieren poröser Natursteine wie Kalk-, Tuff- oder Sandsteinen ziehen die Mittel in den Stein ein, so daß die natürliche Oberfläche des Steines weitgehend erhalten bleibt.

Innerhalb kurzer Zeit, je nach eingestellter Verarbeitungszeit der Mittel innerhalb 12 h, sind die Oberflächen der erfindungsgemäß imprägnierten Steine klebefrei. Dies erlaubt auch eine Anwendung des Verfahrens in stark staubbelasteter Umgebung.

Die Erfindung wird durch die folgenden beispielhaft angegebenen Mittel näher erläutert:

I. Zusammensetzung der Einzelkomponenten:

|  | Gewichtsteile | |
| --- | --- | --- |
| A-Komponente | 1 | 2 |
| Verd. S | 50 | 80 |
| Verd. B | 10 | 10 |
| Verd. Z | 20 | 10 |
| 0158 | 20 | - |

|  | Gewichtsteile | |
| --- | --- | --- |
| B-Komponente | 1 | 2 |
| IPD | - | 30 |
| V 217 | 90 | - |
| TMD | - | 50 |
| V 214 | - | 20 |
| EDR 148 | 10 | 10 |

II. Imprägniermittel-Zusammensetzung

```
                                     Gewichtsteile
                                    1          2
          ─────────────────────────────────────────
          A-Komponente     (1) 100    (3) 300
          B-Komponente     (1)  43    (3)  30
          Lsgn.                 -          -
          Wasser               60          -


          Mischviskosität
          (mPa.s)              10         10
          Verarbeitungszeit    1 h       1,5 h


          Empfohlene       Beton     Sand-
          Applikation                stein
                                     grobporig
```

III. Erläuterung zu den Abkürkungen

```
          Abkürzung    Name                                   Viskosität
                                                              (mPa.s)
          ───────────────────────────────────────────── ──────────────
          Verd. S      1,6-Hexandiglycidylether               10
          Verd. B      Butylglycidylether                      1,2
          Verd. Z      C13-C15-Alkylglycidylether              8
          0158         Bisphenol-F-Diglycidylether          1200
          IPD          Isophorondiamin                        10
          V 217        Cyanethyliertes IPD                    230
          TMD          Trimethylhexamethylendiamin             5
          V 214        Cyanethyliertes TMD                    30
          EDR 148      Aminterminierter Polyethanether         8
                       (Jeffamine EDR 148)
          Lsgn.        Lösungsmittelgemisch
                       50 GT Toluol,
                       50 GT Methylethylketon
```

**Patentansprüche**

1. Epoxidgruppen enthaltende Mittel zur Konservierung von Steinen durch Imprägnierung, bestehend aus einem Gemisch von aliphatischen Diglycidylethern mit einer linearen Grundkette mit 4 bis 12 C-Atomen und Monoglycidylethern mit einer linearen Grundkette von 4 bis 15 C-Atomen, letztere in einem Anteil von bis zu 30 Gew.-%, bezogen auf den Gesamtanteil an Glycidylethern, sowie die zur Härtung derselben notwendigen Härter.

2. Mittel nach Anspruch 1, **dadurch gekennzeichnet,** daß sie 0 bis 60 Gew.-%, bezogen auf das fertige Mittel, eines handelsüblichen Lösemittels enthalten.

3. Mittel nach den Ansprüchen 1 und 2, **dadurch gekennzeichnet,** daß sie 0 bis 5 Gew.-%, bezogen auf das fertige Mittel, einer Epoxisilanverbindung enthalten.

4. Mittel nach den Ansprüchen 1 bis 4, **dadurch gekennzeichnet,** daß sie 0 bis 5 Gew.-%, bezogen auf das fertige Mittel, einer Aminosilanverbindung enthalten.

5. Mittel nach den Ansprüchen 1 bis 4, **dadurch gekennzeichnet,** daß sie 0 bis 20 Gew.-%, bezogen auf das fertige Mittel eines merkaptoendständigen Polysulfidoligomers enthalten.

6. Mittel nach einem der Ansprüche 1 bis 5, **dadurch gekennzeichnet,** daß sie als wäßrige Emulsion eingesetzt werden.

7. Verfahren zur Konservierung von Steinen durch Imprägnierung mit epoxidgruppenhaltigen Verbindungen, **dadurch gekennzeichnet,** daß die Steine mit einem Mittel gemäß den Ansprüchen 1 bis 6 imprägniert werden.

## Claims

1. Agents containing epoxide groups for the preserving of stones by impregnation, consisting of a mixture of aliphatic diglycidyl ethers based on a chain of 4 to 12 C-atoms, and of monoglycidyl ethers with a linear basic chain of 4 to 15 C-atoms, the latter being in a proportion of up to 30 wt.-% related to the total proportion of glycidyl ethers, and the hardeners necessary for the hardening of the same.

2. Agents according to Claim 1, characterised in that they contain 0 to 60 wt.-%, related to the finished agent, of a solvent normal in the trade.

3. Agents according to Claims 1 and 2, characterised in that they contain 0 to 5 wt.-%, related to the finished agent, of an epoxy silane compound.

4. Agents according to Claims 1 to 4 [sic], characterised in that they contain 0 to 5 wt.-%, related to the finished agent, of an amino silane compound.

5. Agents according to Claims 1 to 4, characterised in that they contain 0 to 20 wt.-%, related to the finished agent, of a mercapto-terminal polysulphide oligomer.

6. Agents according to any one of Claims 1 to 5, characterised in that they are used in the form of an aqueous emulsion.

7. A method for preserving stones by impregnation with compounds containing epoxide groups, characterised in that the stones are impregnated with an agent according to Claims 1 to 6.

## Revendications

1. Agents contenant des groupes époxy pour la conservation des pierres par imprégnation, constitués par un mélange d'éthers diglycidiques aliphatiques avec une chaîne de base linéaire comportant 4 à 12 atomes de C et d'éthers monoglycidiques avec une chaîne de base linéaire comportant 4 à 15 atomes de C, ces derniers représentant une fraction jusqu'à 30% en poids par rapport à la fraction totale des éthers glycidiques, ainsi que par les durcisseurs nécessaires à leur durcissement.

2. Agents selon la revendication 1, caractérisés en ce qu'ils contiennent 0 à 60% en poids, par rapport à l'agent final, d'un solvant du commerce.

3. Agents selon les revendications 1 et 2, caractérisés en ce qu'ils contiennent 0 à 5% en poids, par rapport à l'agent final, d'un composé d'époxysilane.

4. Agents selon les revendications 1 à 4, caractérisés en ce qu'ils contiennent 0 à 5% en poids, par rapport à l'agent final, d'un composé d'aminosilane.

5. Agents selon les revendications 1 à 4, caractérisés en ce qu'ils contiennent 0 à 20% en poids, par rapport à l'agent final, d'un polysulfure oligomère à groupes mercapto terminaux.

6. Agents selon les revendications 1 à 5, caractérisés en ce qu'ils sont mis en oeuvre sous forme d'une émulsion aqueuse.

7. Procédé pour la conservation des pierres par imprégnation à l'aide de composés contenant des groupes époxy, caractérisé en ce que les pierres sont imprégnées d'un agent selon les revendications 1 à 6.